# EUROPEAN PATENT APPLICATION

(11) **EP 4 738 580 A1**
(43) Date of publication of application: **06.05.2026**
(21) Application number: 24888966.9
(22) Date of filing: 17.10.2024
(51) Int. Cl.: H01M 50/264, H01M 50/271, H01M 50/211, H01M 50/251

(54) **BATTERY ASSEMBLY**

(30) Priority: 08.11.2023 KR 20230154000
(71) Applicant: LG Energy Solution, Ltd., Seoul 07335 (KR)
(72) Inventor: JO, Sang-Hyun, Daejeon 34122 (KR); LEE, Jeong-Won, Daejeon 34122 (KR); JEONG, Chan-Young, Daejeon 34122 (KR)
(74) Representative: BCKIP Part mbB
(86) International application number: PCT/KR2024/015790
(87) International publication number: WO 2025/100773

(57) **Abstract**

Disclosed is a battery assembly. The battery assembly includes a base plate; a first side wall coupled to an upper surface of the base plate and extending in a front and rear direction; a second side wall coupled to the upper surface of the base plate and extending in the front and rear direction, the second side wall being spaced apart from the first side wall; a plurality of battery cells positioned between the first side wall and the second side wall and stacked in a right and left direction; and a top cover having one side coupled to the first side wall and the other side coupled to the second side wall.

## Description

### TECHNICAL FIELD

The present disclosure relates to a battery assembly.

This application is based on and claims priority from Korean Patent Application No. 10-2023-0154000, filed on November 8, 2023, with the Korean Intellectual Property Office, the disclosure of which is incorporated herein in its entirety by reference.

### BACKGROUND ART

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Recently, as issues such as power shortage and eco-friendly energy have come to the fore, an energy storage system (ESS) for storing generated power has been receiving more attention. For example, a smart grid system has been proposed as one of the methods for controlling power supply and demand. The amount of power consumed by consumers is not always constant and may fluctuate frequently. A representative example is that power consumption increases rapidly in the afternoon in the summer due to the use of air conditioners and then decreases rapidly at night. In terms of power consumers, power consumption is not constant and may fluctuate frequently, but in terms of power suppliers, it is realistically difficult to match such power consumption even if power production is controlled to some extent. Therefore, such imbalance in power supply and consumption may cause power oversupply or power shortage, and the smart grid system may flexibly store and control power to solve such problems. A smart grid system is a concept that stores electricity when or where there is a surplus of electricity, and supplies the stored electricity when or where there is a shortage of electricity. One of the key components for building such a smart grid system is an energy storage system for storing electricity. In addition, as the commercialization of electric vehicles has been in full swing, energy storage systems may also be utilized in facilities for charging electric vehicles, such as charging stations.

Such an energy storage system may include a plurality of battery packs or battery assemblies. In order to reduce the weight of the energy storage system and increase the energy density, a structure is required that may stably accommodate battery cells while simplifying the structure of the battery assembly.

### DISCLOSURE

### Technical Problem

The present disclosure is designed to solve these and other problems.

The present disclosure is also directed to providing a battery assembly in which a plurality of battery cells are stably fixed.

The present disclosure is also directed to providing a battery assembly with a reduced number of components and a simplified structure.

The present disclosure is also directed to providing a battery assembly with improved energy density.

### Technical Solution

In one aspect of the present disclosure, there is provided a battery assembly comprising: a base plate; a first side wall coupled to an upper surface of the base plate and extending in a front and rear direction; a second side wall coupled to the upper surface of the base plate and extending in the front and rear direction, the second side wall being spaced apart from the first side wall; a plurality of battery cells positioned between the first side wall and the second side wall and stacked in a right and left direction; and a top cover having one side coupled to the first side wall and the other side coupled to the second side wall.

In addition, the first side wall and the second side wall may compress the plurality of battery cells in the right and left direction.

In addition, the battery assembly may further comprise a first fastening member configured to fasten the first side wall and the top cover; and a second fastening member configured to fasten the second side wall and the top cover.

In addition, the battery assembly may further comprise a third fastening member configured to fasten the first side wall and the base plate; and a fourth fastening member configured to fasten the second side wall and the base plate.

In addition, the battery assembly may further comprise a front cover positioned in front of the plurality of battery cells and having one side coupled to the first side wall and the other side coupled to the second side wall.

In addition, the front cover may include a body configured to cover between the first side wall and the second side wall; a first coupling portion extending rearward from the body and configured to cover an outer surface of the first side wall; and a second coupling portion extending rearward from the body and configured to cover an outer surface of the second side wall.

In addition, the battery assembly may further comprise a fifth fastening member configured to fasten the first coupling portion and the first side wall; and a sixth fastening member configured to fasten the second coupling portion and the second side wall.

In addition, the plurality of battery cells may constitute a first battery array, and the battery assembly may comprise a third side wall coupled to the upper surface of the base plate and positioned rearward of the first side wall and extending in the front and rear direction; a fourth side wall coupled to the upper surface of the base plate and positioned rearward of the second side wall and extending in the front and rear direction; and a second battery array positioned between the third side wall and the fourth side wall and having a plurality of battery cells stacked in the right and left direction.

In addition, one side of the top cover may be coupled to the third side wall, and the other side of the top cover may be coupled to the fourth side wall.

In addition, the battery assembly may further comprise a first bracket having one side coupled to the first side wall and the other side coupled to the third side wall; and a second bracket having one side coupled to the second side wall and the other side coupled to the fourth side wall.

In addition, the battery assembly may further comprise a rear cover positioned rearward of the second battery array and having one side coupled to the third side wall and the other side coupled to the fourth side wall.

A battery rack according to one aspect of the present disclosure may include the battery assembly of the present disclosure.

An energy storage system according to one aspect of the present disclosure may include the battery assembly of the present disclosure.

### Advantageous Effects

According to at least one of the embodiments of the present disclosure, a plurality of battery cells may be stably fixed.

According to at least one of the embodiments of the present disclosure, the number of components in a battery assembly may be reduced and the structure may be simplified.

According to at least one of the embodiments of the present disclosure, the energy density of the battery assembly may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery assembly according to an embodiment of the present disclosure.
FIG. 2 is a drawing showing the battery assembly of FIG. 1, in which some components are exploded.
FIG. 3 is a drawing showing a base plate of FIG. 2, in which some components are exploded.
FIG. 4 is an enlarged drawing showing a part A of FIG. 3.
FIG. 5 is a drawing showing the base plate of FIG. 2.
FIG. 6 is a drawing showing some components of the battery assembly of FIG. 1.
FIG. 7 is a drawing showing a first battery array of FIG. 2, in which some components are exploded.
FIG. 8 is a drawing showing the first battery array of FIG. 2.
FIG. 9 is a drawing showing the first battery array of FIG. 8 from a different direction.
FIGS. 10 and 11 are drawings showing the coupling of some components of the battery assembly of FIG. 6 and the first battery array.
FIG. 12 is an enlarged drawing showing a part B of FIG. 11.
FIG. 13 is an enlarged drawing showing a part C of FIG. 11.
FIG. 14 is a cross-sectional view taken along the cutting line D-D' of FIG. 11.
FIGS. 15 and 16 are drawings showing the coupling of some components of the battery assembly of FIG. 11 and the insulation sheet.
FIG. 17 is a cross-sectional view taken along the cutting line E-E' of FIG. 16.
FIG. 18 is a drawing showing the coupling of some components of the battery assembly of FIG. 16 and the second battery array.
FIG. 19 is a drawing showing the coupling of some components of the battery assembly of FIG. 18 and a first bracket and a second bracket.
FIGS. 20 and 21 are drawings showing the coupling of some components of the battery assembly of FIG. 19 and a front cover and a rear cover.
FIG. 22 is an enlarged drawing showing a part F of FIG. 21.
FIG. 23 is an enlarged drawing showing a part G of FIG. 21.
FIGS. 24 and 25 are drawings showing the coupling of some components of the battery assembly of FIG. 21 and a top cover.
FIG. 26 is a cross-sectional view taken along the cutting line H-H' of FIG. 25.
FIG. 27 is a cross-sectional view taken along the cutting line I-I' of FIG. 25.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

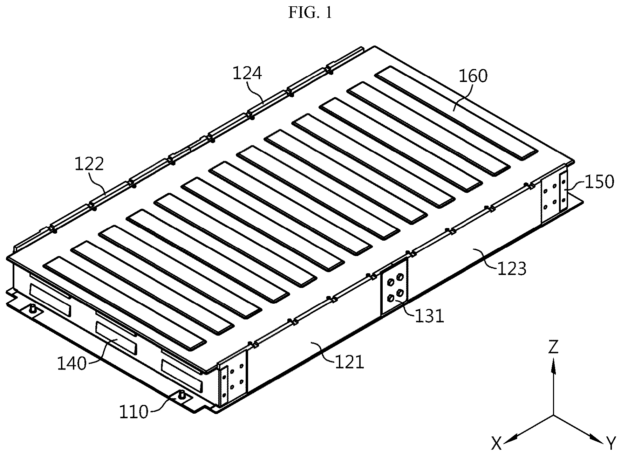

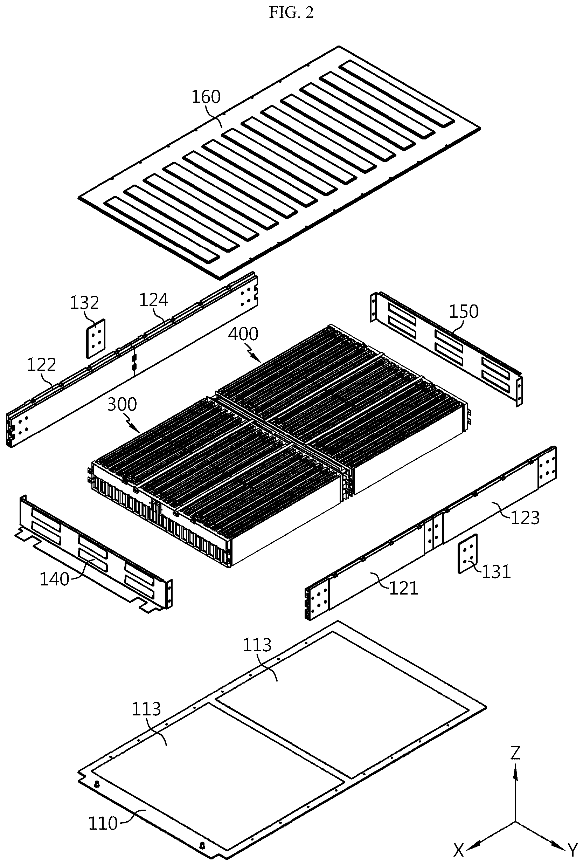

FIG. 1 is a drawing showing a battery assembly according to an embodiment of the present disclosure. FIG. 2 is a drawing showing the battery assembly of FIG. 1, in which some components are exploded. Referring to FIGS. 1 and 2, the battery assembly according to an embodiment of the present disclosure may include a base plate 110, a first side wall 121, a second side wall 122, a plurality of battery cells 200, and a top cover 160.

The base plate 110 may have a rectangular shape. The base plate 110 may form an outer appearance of the battery assembly.

The first side wall 121 may be coupled, fastened, attached or fixed to the upper surface of the base plate 110. The first side wall 121 may extend along the front and rear direction or the X-axis direction. The first side wall 121 may form an outer appearance of the battery assembly.

The second side wall 122 may be coupled, fastened, attached, or fixed to the upper surface of the base plate 110. The second side wall 122 may extend along the front and rear direction or the X-axis direction. The second side wall 122 may be spaced apart from the first side wall 121 in the right and left direction or the Y-axis direction. Also, the first side wall 121 and the second side wall 122 may be opposite to each other. Alternatively, the first side wall 121 and the second side wall 122 may face each other. The second side wall 122 may form an outer appearance of the battery assembly.

The battery cell 200 may be provided in plurality. At this time, the battery cell 200 may mean a secondary battery. In addition, the battery cell 200 may be a secondary battery having a pouch shape. The battery cell 200 may extend in the front and rear direction or the X-axis direction. The plurality of battery cells 200 may be stacked in the right and left direction or the Y-axis direction. The plurality of battery cells 200 may be positioned between the first side wall 121 and the second side wall 122.

The top cover 160 may have a plate shape. The top cover 160 may have a rectangular shape. The top cover 160 may cover the upper surface of the plurality of battery cells 200. One side of the top cover 160 may be fastened, coupled, attached, or fixed to the first side wall 121. In addition, the other side of the top cover 160 may be fastened, coupled, attached, or fixed to the second side wall 122. The top cover 160 may form an outer appearance of the battery assembly.

The plurality of battery cells 200 may be surrounded by the base plate 110, the first side wall 121, the second side wall 122, and the top cover 160.

According to this configuration of the present disclosure, the structure of the battery assembly may be simplified. Since the base plate 110, the first side wall 121, the second side wall 122, and the top cover 160 directly accommodate the plurality of battery cells 200, a separate case for accommodating the plurality of battery cells 200 may not be provided. As a result, the number of components of the battery assembly may be reduced. Also, the productivity of the battery assembly may be improved. In addition, the energy density of the battery assembly may be improved.

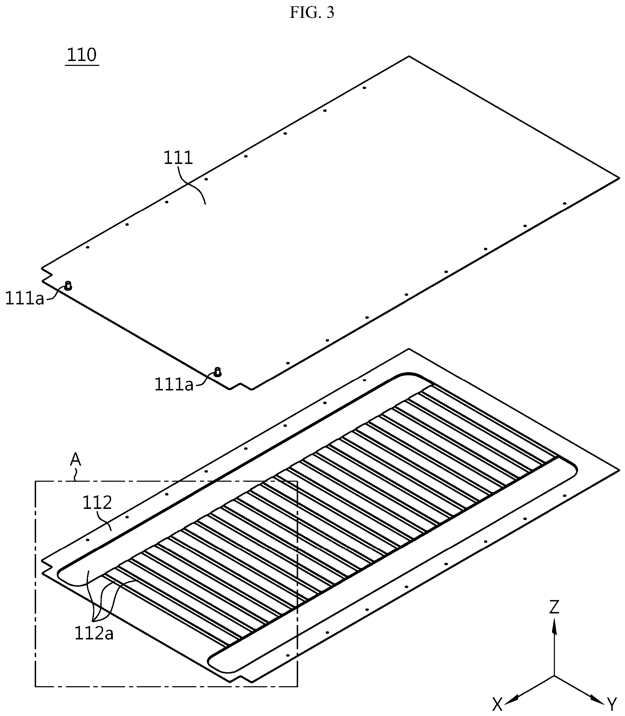

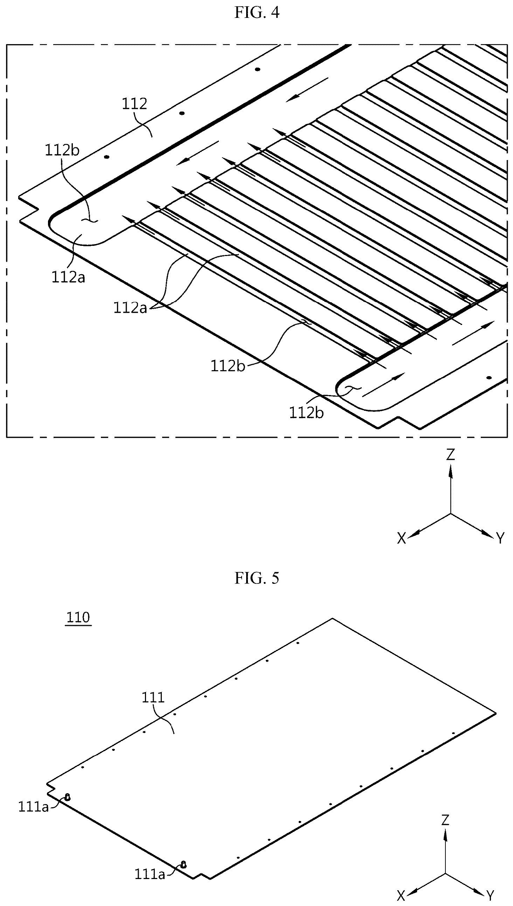

FIG. 3 is a drawing showing a base plate 110 of FIG. 2, in which some components are exploded. FIG. 4 is an enlarged drawing showing a part A of FIG. 3. FIG. 5 is a drawing showing the base plate 110 of FIG. 2.

Referring to FIGS. 3 to 5, the base plate 110 may include an upper plate 111 and a lower plate 112. The upper plate 111 may be coupled, attached, bonded, fastened, or fixed to the upper surface of the lower plate 112. The lower plate 112 may include a bending portion 112a. The bending portion 112a may protrude in a downward direction or a -Z-axis direction. The bending portion 112a may form a flow path 112b.

The upper plate 111 may have a port 111a at the upper surface. The port 111a may be provided in a pair. A cooling fluid introduced through one port 111a may flow along the flow path 112b and may be discharged through the other port 111a. The arrows in FIG. 4 exemplarily illustrate the movement of the cooling fluid.

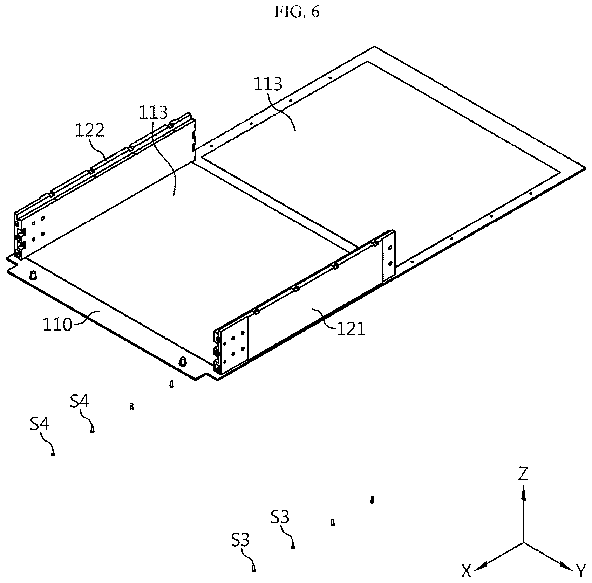

FIG. 6 is a drawing showing some components of the battery assembly of FIG. 1. Referring to FIG. 6, the battery assembly according to an embodiment of the present disclosure may include a third fastening member S3 and a fourth fastening member S4.

The third fastening member S3 may fasten the first side wall 121 and the base plate 110. The third fastening member S3 may penetrate the base plate 110 and be inserted into the lower part of the first side wall 121. The third fastening member S3 may be provided in plurality. The plurality of third fastening members S3 may be arranged along the longitudinal direction of the first side wall 121.

The fourth fastening member S4 may fasten the second side wall 122 and the base plate 110. The fourth fastening member S4 may penetrate the base plate 110 and be inserted into the lower part of the second side wall 122. The fourth fastening member S4 may be provided in plurality. The plurality of fourth fastening members S4 may be arranged along the longitudinal direction of the second side wall 122.

According to this configuration of the present disclosure, the first side wall 121 and the second side wall 122 may be stably fixed and supported. As a result, a plurality of battery assemblies may be stably fixed.

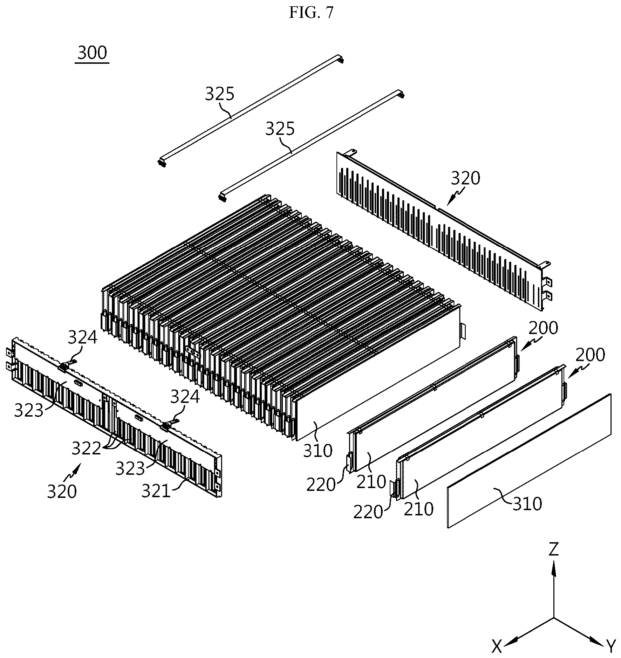

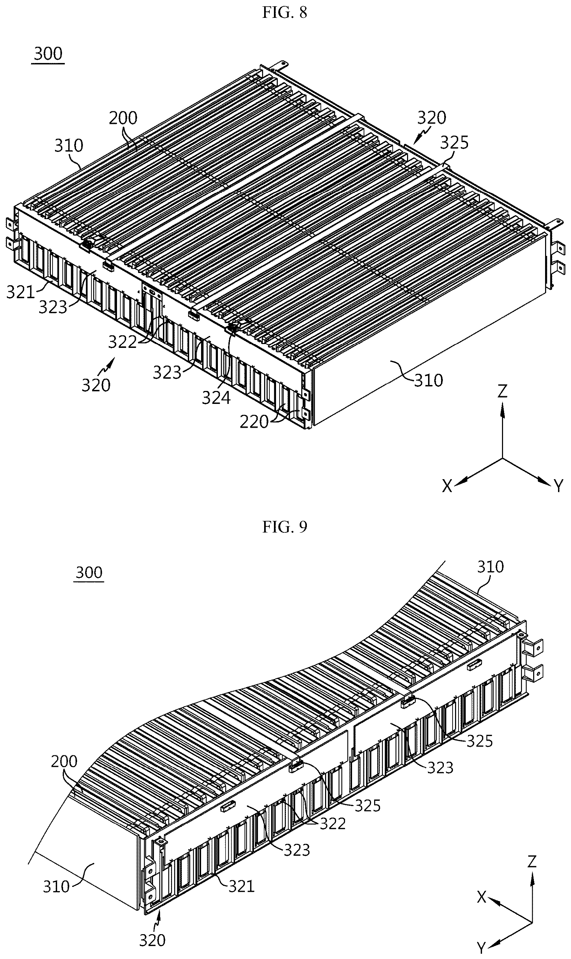

FIG. 7 is a drawing showing a first battery array 300 of FIG. 2, in which some components are exploded. FIG. 8 is a drawing showing the first battery array 300 of FIG. 2. FIG. 9 is a drawing showing the first battery array 300 of FIG. 8 from a different direction.

Referring to FIGS. 7 to 9, the plurality of battery cells 200 may constitute a battery array. The battery cell 200 may include an accommodation portion 210, a sealing portion, and an electrode lead 220. The accommodation portion 210 may accommodate an electrode assembly. The accommodation portion 210 may extend in the front and rear direction or the X-axis direction. The sealing portion may be formed at the periphery of the accommodation portion 210. Also, the sealing portion may protrude forward and rearward of the accommodation portion 210. The electrode lead 220 may protrude forward and rearward of the sealing portion or the accommodation portion 210.

Also, the battery array may include a pad 310. The pad 310 may cover the accommodation portion 210. The pad 310 may be elastic. Also, the pad 310 may be electrically insulating. For example, the pad 310 may include a silicone material. Also, the pad 310 may extend in the front and rear direction or the X-axis direction. The pad 310 may be provided in plurality. The plurality of pads 310 may be positioned between the plurality of battery cells 200. The plurality of pads 310 and the plurality of battery cells 200 may be stacked in the right and left direction or the Y-axis direction.

The bus bar assembly 320 may be provided at the front side and the rear side of the battery array, respectively. The bus bar assembly 320 may include a bus bar frame 321, a bus bar 322, and an interconnect board (ICB) 323. The interconnect boards 323 may be provided in plurality. The bus bars 322 may be electrically connected to the electrode leads 220 of the plurality of battery cells 200. The bus bar 322 may be installed, coupled, fastened, fixed, or attached to the bus bar frame 321. The interconnect board 323 may be installed, coupled, fastened, fixed, or attached to the bus bar frame 321. The interconnect board 323 may be electrically connected to the bus bar 322.

The battery array may include a sensing line 325. The sensing line 325 may extend in the front and rear direction or the X-axis direction. The sensing line 325 may be electrically connected to the interconnect board 323 of the bus bar assembly 320 at the front side and the interconnect board 323 of the bus bar assembly 320 at the rear side. The sensing line 325 and the interconnect board 323 may transmit information of the plurality of battery cells 200. The sensing line 325 may be provided in plurality.

Also, the battery array may include a temperature sensor 324. The temperature sensor 324 may be installed in the bus bar frame 321 of the bus bar assembly 320 at the front side. The temperature sensor 324 may obtain temperature information of the plurality of battery cells 200. The temperature sensor 324 may be provided in plurality.

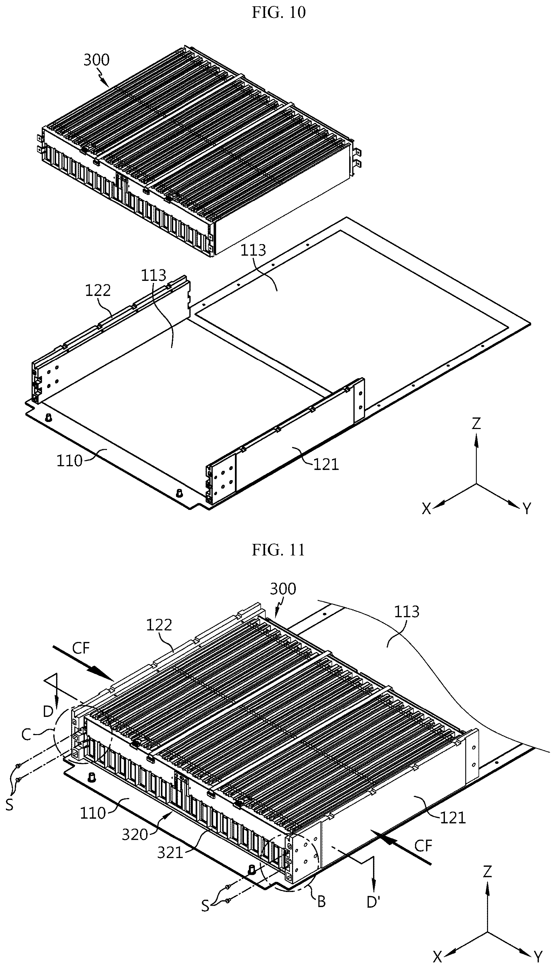

FIGS. 10 and 11 are drawings showing the coupling of some components of the battery assembly of FIG. 6 and the first battery array 300.

Referring to FIGS. 10 and 11, the first battery array 300 may be positioned between the first side wall 121 and the second side wall 122. Also, the first battery array 300 may be fixed between the first side wall 121 and the second side wall 122. The first side wall 121 and the second side wall 122 may provide a compressive force (CF) that compresses the first battery array 300 or the plurality of battery cells 200 in the right and left direction.

Also, a heat transfer member 113 may be positioned between the first battery array 300 and the base plate 110. The heat transfer member 113 may include a material having high thermal conductivity. The heat transfer member 113 may transfer heat generated from the first battery array 300 to the base plate 110.

According to this configuration of the present disclosure, the first battery array 300 or the plurality of battery cells 200 may be stably fixed. By fixing the plurality of battery cells 200 to the first side wall 121 and the second side wall 122 forming the outer appearance of the battery assembly, the number of components of the battery assembly may be reduced and the structure may be simplified.

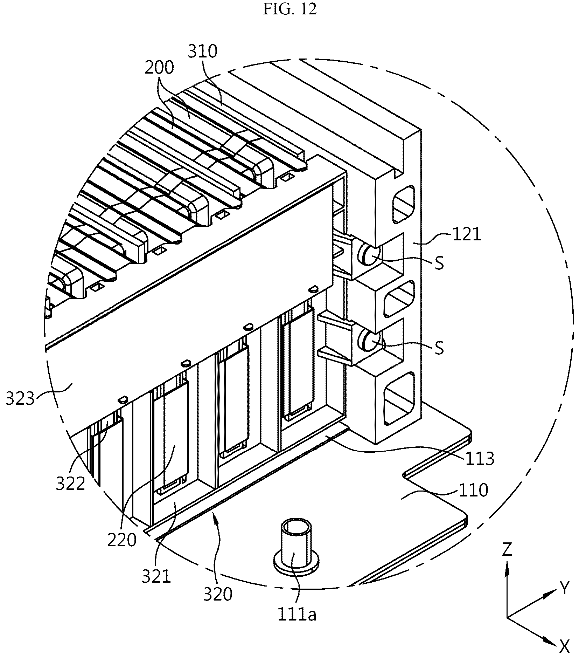

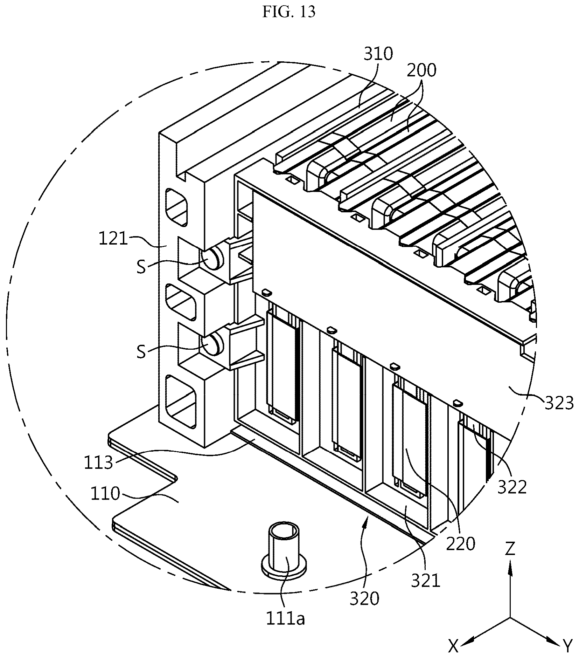

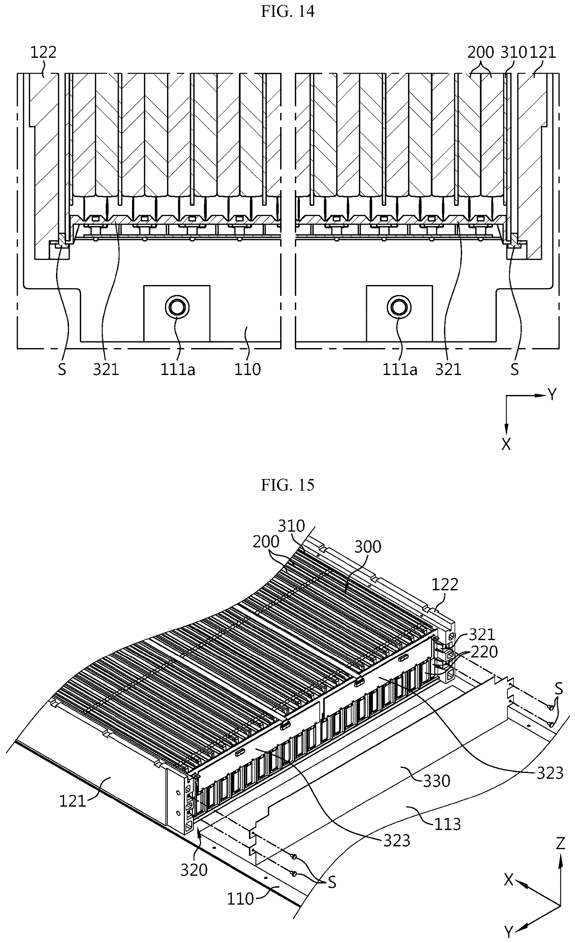

FIG. 12 is an enlarged drawing showing a part B of FIG. 11. FIG. 13 is an enlarged drawing showing a part C of FIG. 11. FIG. 14 is a cross-sectional view taken along the cutting line D-D' of FIG. 11. Referring to FIGS. 11 to 14, one side of the bus bar frame 321 of the bus bar assembly 320 at the front side may be coupled, fastened, fixed, or attached to the first side wall 121. For example, the fastening member S may fasten the bus bar frame 321 and the first side wall 121. Also, the other side of the bus bar frame 321 of the bus bar assembly 320 at the front side may be coupled, fastened, fixed, or attached to the second side wall 122. For example, the fastening member S may fasten the bus bar frame 321 and the second side wall 122.

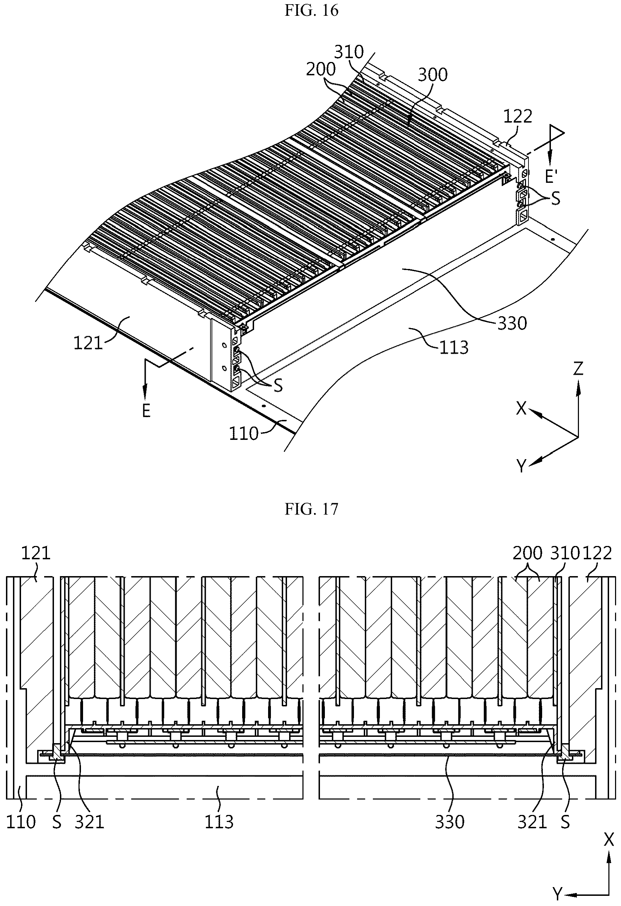

FIGS. 15 and 16 are drawings showing the coupling of some components of the battery assembly of FIG. 11 and the insulation sheet 330. FIG. 17 is a cross-sectional view taken along the cutting line E-E' of FIG. 16.

Referring to FIGS. 15 to 17, one side of the bus bar frame 321 of the bus bar assembly 320 at the rear side may be coupled, fastened, fixed, or attached to the first side wall 121. Also, the other side of the bus bar frame 321 of the bus bar assembly 320 at the rear side may be coupled, fastened, fixed, or attached to the second side wall 122.

The insulation sheet 330 may be positioned at the rear of the bus bar assembly 320 at the rear side. The insulation sheet 330 may cover the bus bar assembly 320 at the rear side. The insulation sheet 330 may be electrically insulating. One side of the insulation sheet 330 may be coupled, fastened, fixed, or attached to the first side wall 121. Also, the other side of the insulation sheet 330 may be coupled, fastened, fixed, or attached to the second side wall 122.

For example, the fastening member S may fasten the bus bar frame 321 and the insulation sheet 330 to the first side wall 121. Also, the fastening member S may fasten the bus bar frame 321 and the insulation sheet 330 to the second side wall 122.

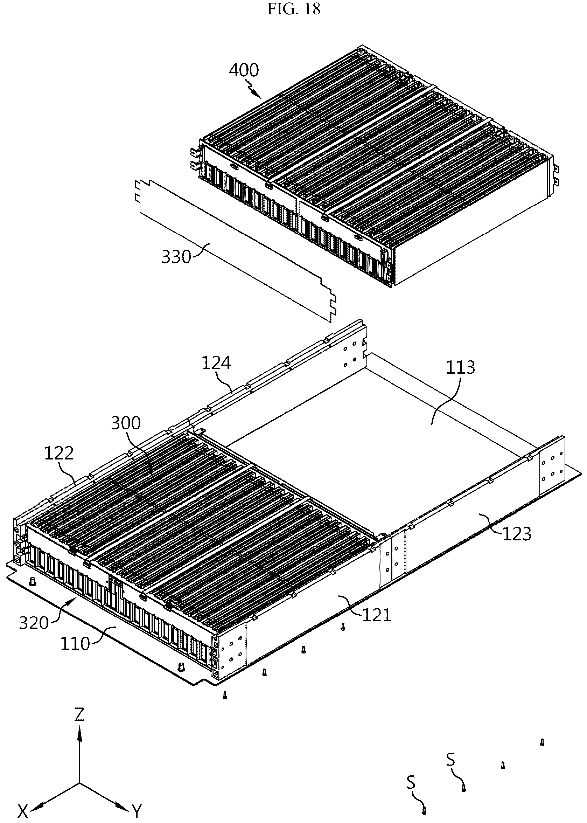

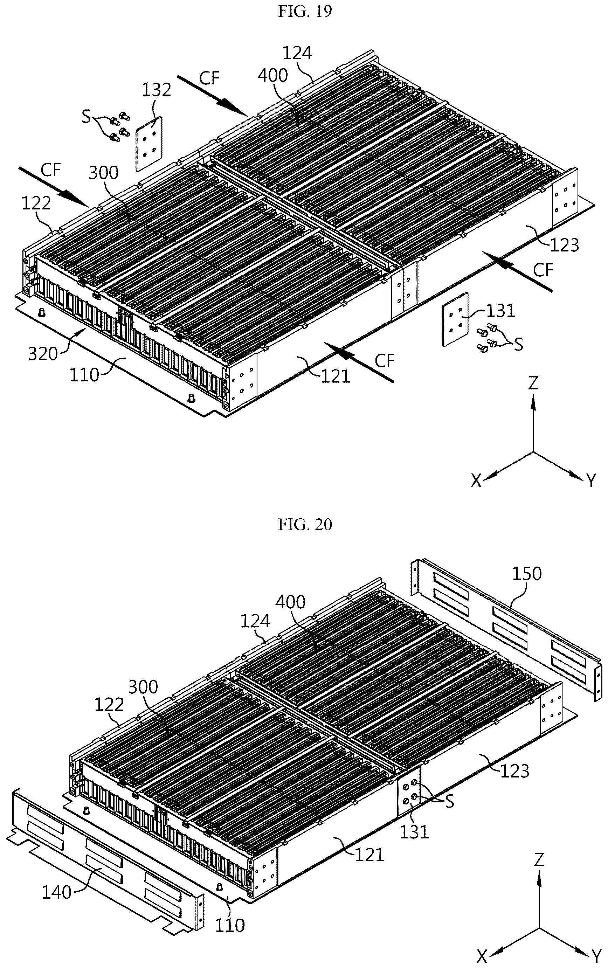

FIG. 18 is a drawing showing the coupling of some components of the battery assembly of FIG. 16 and the second battery array 400. FIG. 19 is a drawing showing the coupling of some components of the battery assembly of FIG. 18 and a first bracket 131 and a second bracket 132. The battery assembly may include a second battery array 400. The second battery array 400 may include substantially the same configuration as the first battery array 300. Also, the second battery array 400 may have substantially the same structure as the first battery array 300. The second battery array 400 may include a plurality of battery cells 200 and a plurality of pads 310 that are stacked in the right and left direction or the Y-axis direction.

The second battery array 400 may be located at the rear of the first battery array 300. Also, the second battery array 400 may include an insulation sheet 330 at the front side. The insulation sheet 330 may prevent the first battery array 300 and the second battery array 400 from being short-circuited.

The third side wall 123 may be coupled, fastened, attached or fixed to the upper surface of the base plate 110. The third side wall 123 may have substantially the same structure as the first side wall 121. The third side wall 123 may extend along the front and rear direction or the X-axis direction. The third side wall 123 may form an outer appearance of the battery assembly. The third side wall 123 may be located at the rear of the first side wall 121.

The fourth side wall 124 may be coupled, fastened, attached, or fixed to the upper surface of the base plate 110. The fourth side wall 124 may have substantially the same structure as the second side wall 122. The fourth side wall 124 may extend along the front and rear direction or the X-axis direction. The fourth side wall 124 may be spaced apart from the third side wall 123 in the right and left direction or the Y-axis direction. Also, the third side wall 123 and the fourth side wall 124 may be opposite to each other. Alternatively, the third side wall 123 and the fourth side wall 124 may face each other. The fourth side wall 124 may form an outer appearance of the battery assembly. The fourth side wall 124 may be located at the rear of the second side wall 122.

The second battery array 400 may be positioned between the third side wall 123 and the fourth side wall 124. Also, the second battery array 400 may be fixed between the third side wall 123 and the fourth side wall 124. The third side wall 123 and the fourth side wall 124 may provide a compressive force (CF) to compress the first battery array 300 or the plurality of battery cells 200 in the right and left direction.

Also, a heat transfer member 113 may be positioned between the second battery array 400 and the base plate 110. The heat transfer member 113 may transfer heat generated from the second battery array 400 to the base plate 110.

According to this configuration of the present disclosure, the second battery array 400 may be stably fixed. Since the second battery array 400 is fixed to the third side wall 123 and the fourth side wall 124, which form the outer appearance of the battery assembly, the number of components of the battery assembly may be reduced and the structure may be simplified.

FIG. 20 is a drawing showing the coupling of some components of the battery assembly of FIG. 19 and brackets 131, 132. Referring to FIGS. 18 and 19, the first bracket 131 may have a flat shape. The first bracket 131 may have one side coupled to the first side wall 121 and the other side coupled to the third side wall 123. The fastening member S may fasten the first bracket 131 and the rear side of the first side wall 121. Also, the fastening member S may fasten the first bracket 131 and the front side of the third side wall 123. The first bracket 131 may form an outer appearance of the battery assembly.

The second bracket 132 may have substantially the same shape as the first bracket 131. The second bracket 132 may have one side coupled to the second side wall 122 and the other side coupled to the fourth side wall 124. The fastening member S may fasten the second bracket 132 and the rear side of the third side wall 123. Also, the fastening member S may fasten the second bracket 132 and the front side of the fourth side wall 124. The second bracket 132 may form an outer appearance of the battery assembly.

According to this configuration of the present disclosure, the rigidity of the battery assembly may be improved. In addition, the first to fourth side walls 121 to 124 may be stably fixed. As a result, the first battery array 300 and the second battery array 400 may be stably fixed.

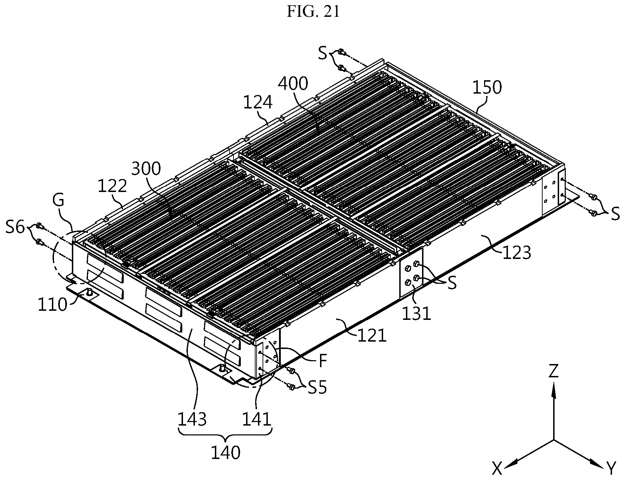

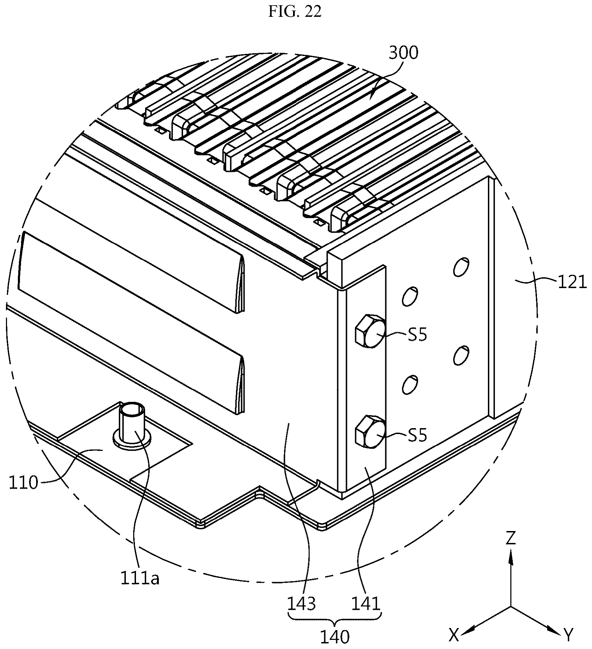

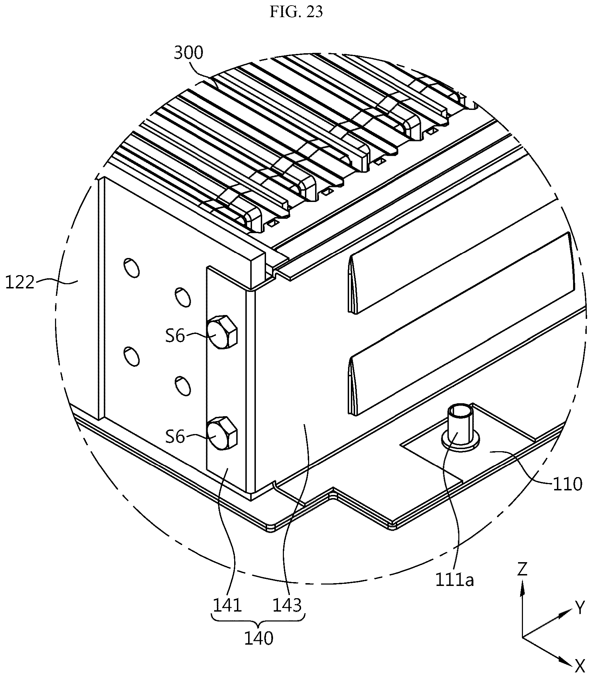

FIGS. 20 and 21 are drawings showing the coupling of some components of the battery assembly of FIG. 19 and a front cover 140 and a rear cover 150. FIG. 22 is an enlarged drawing showing a part F of FIG. 21. FIG. 23 is an enlarged drawing showing a part G of FIG. 21.

Referring to FIGS. 20 to 23, the battery assembly according to an embodiment of the present disclosure may include a front cover 140. The front cover 140 may be positioned in front of the plurality of battery cells 200 or the first battery array 300. The front cover 140 may cover the bus bar assembly 320 at the front side. The front cover 140 may have one side coupled to the first side wall 121 and the other side coupled to the second side wall 122. The front cover 140 may form an outer appearance of the battery assembly.

According to this configuration of the present disclosure, since the front cover 140 is fastened to the first side wall 121 and the second side wall 122, the structure of the battery assembly may be simplified and the number of components may be reduced.

Referring to FIGS. 20 to 23, the front cover 140 may include a body 143, a first coupling portion 141, and a second coupling portion 142. The body 143 may have a flat shape. The body 143 may cover the space between the first side wall 121 and the second side wall 122. Also, the body 143 may cover the bus bar assembly 320 at the front side.

The first coupling portion 141 may be formed at the right side of the body 143. The first coupling portion 141 may extend rearward from the body 143. The first coupling portion 141 may cover the outer surface of the first side wall 121.

The second coupling portion 142 may be formed at the left side of the body 143. The second coupling portion 142 may extend rearward from the body 143. The second coupling portion 142 may cover the outer surface of the second side wall 122.

According to this configuration of the present disclosure, the front cover 140 may be stably coupled to the first side wall 121 and the second side wall 122. As a result, the front cover 140 may provide a force to compress the first battery array 300.

Referring to FIGS. 20 to 23, the fifth fastening member S5 may fasten the first coupling portion 141 and the first side wall 121. The fifth fastening member S5 may be provided in plurality.

Also, the sixth fastening member S6 may fasten the second coupling portion 142 and the second side wall 122. The sixth fastening member S6 may be provided in plurality.

According to this configuration of the present disclosure, the front cover 140 may be stably coupled to the first side wall 121 and the second side wall 122.

Referring to FIGS. 20 to 23, the battery assembly according to an embodiment of the present disclosure may include a rear cover 150. The rear cover 150 may include a shape and structure very similar to the front cover 140. The rear cover 150 may be positioned at the rear of the plurality of battery cells 200 or the second battery array 400. The rear cover 150 may cover the bus bar assembly 320 at the rear side of the second battery array 400. The rear cover 150 may have one side coupled to the third side wall 123 and the other side coupled to the fourth side wall 124. The rear cover 150 may form an outer appearance of the battery assembly.

The rear cover 150 may include a body 143 and a pair of coupling portions. Each coupling portion may cover the outer surface of the third side wall 123 and the outer surface of the fourth side wall 124. The fastening member S may fasten the third side wall 123 and the rear cover 150. Also, the fastening member S may fasten the fourth side wall 124 and the rear cover 150.

According to this configuration of the present disclosure, since the rear cover 150 is attached to the third side wall 123 and the fourth side wall 124, the structure of the battery assembly may be simplified and the number of components may be reduced. As a result, the rear cover 150 may provide a force to compress the second battery array 400.

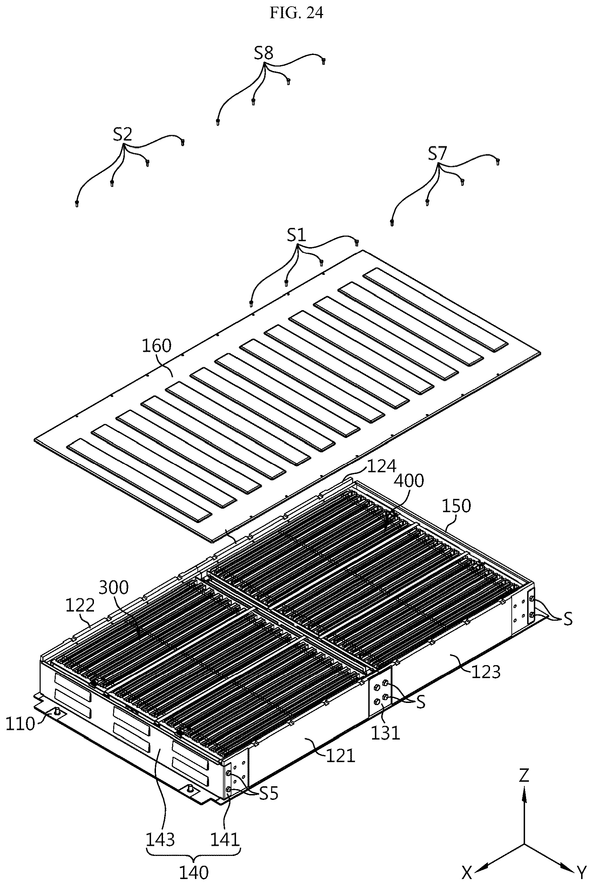

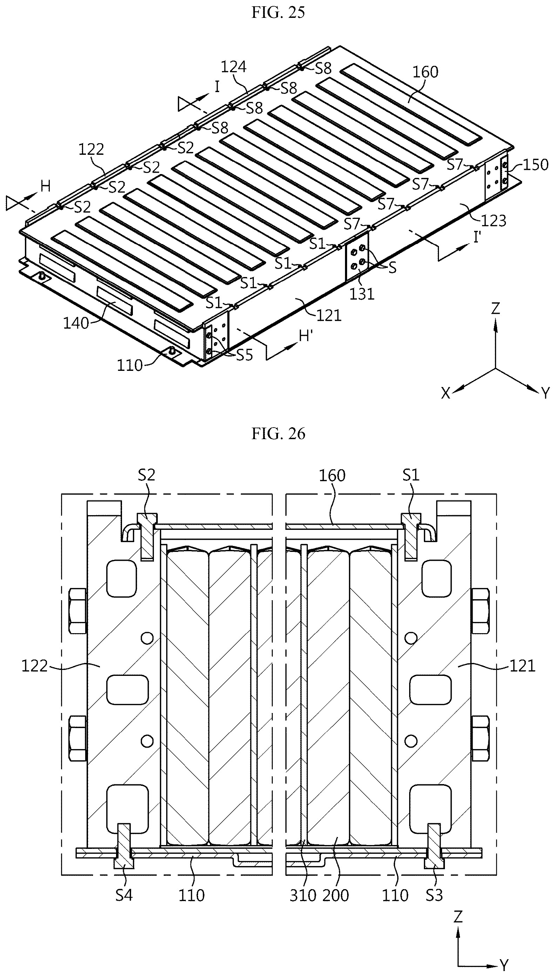

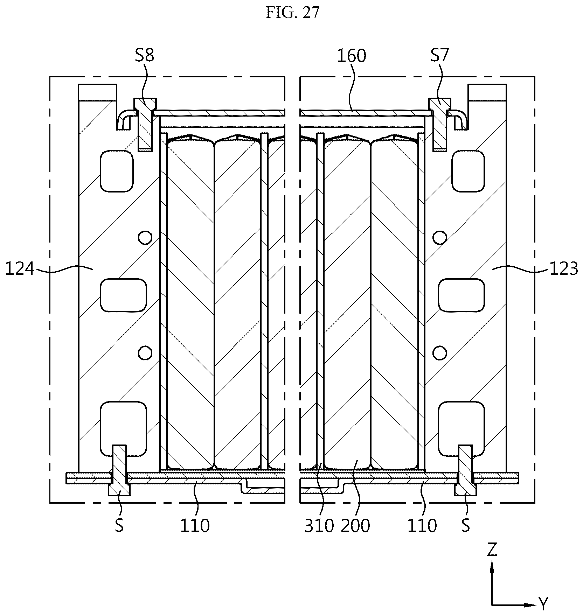

FIGS. 24 and 25 are drawings showing the coupling of some components of the battery assembly of FIG. 21 and a top cover 160. FIG. 26 is a cross-sectional view taken along the cutting line H-H' of FIG. 25. FIG. 27 is a cross-sectional view taken along the cutting line I-I' of FIG. 25.

Referring to FIGS. 24 to 27, the top cover 160 of the battery assembly according to an embodiment of the present disclosure may include one side that is fastened, coupled, attached, or fixed to the first side wall 121. Also, the top cover 160 may include the other side that is fastened, coupled, attached, or fixed to the second side wall 122.

The first fastening member S1 may fasten the first side wall 121 and the top cover 160. The first fastening member S1 may be provided in plurality. The plurality of first fastening members S1 may be arranged along the front and rear direction or the X-axis direction.

The second fastening member S2 may fasten the second side wall 122 and the top cover 160. The second fastening member S2 may be provided in plurality. The plurality of second fastening members S2 may be arranged along the front and rear direction or the X-axis direction.

The top cover 160 may cover the upper surface of the plurality of battery cells 200. Alternatively, the top cover 160 may cover the upper surface of the first battery array 300.

According to this configuration of the present disclosure, since the top cover 160 is attached to the first side wall 121 and the second side wall 122, the structure of the battery assembly may be simplified and the number of components may be reduced.

Also, according to this configuration of the present disclosure, the base plate 110, the first side wall 121, the second side wall 122, and the top cover 160 may stably compress, fix, or support the first battery array 300.

Referring to FIGS. 24 to 27, the top cover 160 of the battery assembly according to an embodiment of the present disclosure may include one side that is fastened, coupled, attached, or fixed to the third side wall 123. Also, the top cover 160 may include the other side that is fastened, coupled, attached, or fixed to the third side wall 123.

The seventh fastening member S7 may fasten the third side wall 123 and the top cover 160. The seventh fastening member S7 may be provided in plurality. The plurality of seventh fastening members S7 may be arranged along the front and rear direction or the X-axis direction.

The eighth fastening member S8 may fasten the fourth side wall 124 and the top cover 160. The eighth fastening member S8 may be provided in plurality. The plurality of the eighth fastening members S8 may be arranged along the front and rear directions or the X-axis direction.

The top cover 160 may cover the upper surface of the plurality of battery cells 200. Alternatively, the top cover 160 may cover the upper surface of the second battery array 400.

According to this configuration of the present disclosure, since the top cover 160 is fastened to the third side wall 123 and the fourth side wall 124, the structure of the battery assembly may be simplified and the number of components may be reduced.

Also, according to this configuration of the present disclosure, the base plate 110, the third side wall 123, the fourth side wall 124, and the top cover 160 may stably compress, fix, or support the second battery array 400.

The battery assembly of the present disclosure may mean a battery module or a battery pack depending on additional components and structures.

A battery rack according to the present disclosure may include the battery assembly. The battery rack may further include a rack frame for fixing, supporting, or installing a plurality of battery assemblies. In addition, the battery rack according to the present disclosure may include a BMS for controlling the plurality of battery assemblies. For example, one BMS may be provided for two battery racks.

A battery container according to the present disclosure may include the battery assembly according to the present disclosure. In addition, the battery container according to the present disclosure may include the battery rack according to the present disclosure. The battery rack may be provided in plurality. The battery container may include a container housing. The container housing may provide an accommodation space for accommodating the battery rack. In addition, the battery container may include a control unit for controlling the plurality of battery racks. In addition, the battery container may be configured to additionally include a sensor for detecting a state of the battery rack or a fire module for controlling a thermal event.

An energy storage system (ESS) according to the present disclosure may include the battery assembly according to the present disclosure. In addition, the energy storage system (ESS) according to the present disclosure may include the battery container according to the present disclosure. The energy storage system may include a plurality of battery containers. Also, the battery container may include a plurality of battery racks. The energy storage system may configure a link group by combining a certain number of battery containers and control containers. As an example, the control container may perform overall control or diagnosis of the battery containers. In addition, the control container may include a DC part, an AC part, a BSC part, etc. to control the battery container. Meanwhile, each control container may be connected to a PCS.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery assembly comprising:
a base plate;
a first side wall coupled to an upper surface of the base plate and extending in a front and rear direction;
a second side wall coupled to the upper surface of the base plate and extending in the front and rear direction, the second side wall being spaced apart from the first side wall;
a plurality of battery cells positioned between the first side wall and the second side wall and stacked in a right and left direction; and
a top cover having one side coupled to the first side wall and the other side coupled to the second side wall.

2. The battery assembly according to claim 1,
wherein the first side wall and the second side wall compress the plurality of battery cells in the right and left direction.

3. The battery assembly according to claim 1, further comprising:
a first fastening member configured to fasten the first side wall and the top cover; and
a second fastening member configured to fasten the second side wall and the top cover.

4. The battery assembly according to claim 1, further comprising:
a third fastening member configured to fasten the first side wall and the base plate; and
a fourth fastening member configured to fasten the second side wall and the base plate.

5. The battery assembly according to claim 1, further comprising:
a front cover positioned in front of the plurality of battery cells and having one side coupled to the first side wall and the other side coupled to the second side wall.

6. The battery assembly according to claim 5,
wherein the front cover includes:
a body configured to cover between the first side wall and the second side wall;
a first coupling portion extending rearward from the body and configured to cover an outer surface of the first side wall; and
a second coupling portion extending rearward from the body and configured to cover an outer surface of the second side wall.

7. The battery assembly according to claim 6, further comprising:
a fifth fastening member configured to fasten the first coupling portion and the first side wall; and
a sixth fastening member configured to fasten the second coupling portion and the second side wall.

8. The battery assembly according to claim 1,
wherein the plurality of battery cells constitute a first battery array, and
wherein the battery assembly comprises:
a third side wall coupled to the upper surface of the base plate and positioned rearward of the first side wall and extending in the front and rear direction;
a fourth side wall coupled to the upper surface of the base plate and positioned rearward of the second side wall and extending in the front and rear direction; and
a second battery array positioned between the third side wall and the fourth side wall and having a plurality of battery cells stacked in the right and left direction.

9. The battery assembly according to claim 8,
wherein one side of the top cover is coupled to the third side wall, and
wherein the other side of the top cover is coupled to the fourth side wall.

10. The battery assembly according to claim 8, further comprising:
a first bracket having one side coupled to the first side wall and the other side coupled to the third side wall; and
a second bracket having one side coupled to the second side wall and the other side coupled to the fourth side wall.

11. The battery assembly according to claim 10, further comprising:
a rear cover positioned rearward of the second battery array and having one side coupled to the third side wall and the other side coupled to the fourth side wall.

12. A battery assembly comprising the battery assembly according to any one of claims 1 to 11.

13. An energy storage system comprising the battery assembly according to any one of claims 1 to 11.
